# EUROPEAN PATENT SPECIFICATION

(11) **EP 0 571 548 B1**
(45) Date of publication and mention of the grant of the patent: **20.05.1998**
(21) Application number: 92907293.2
(22) Date of filing: 12.02.1992
(51) Int. Cl.: C08F 8/00, C08F 283/12, C08L 9/00, C08L 27/12, C08L 29/00, C08L 31/00, C08L 33/00, C08L 33/04, C08L 33/06, C08L 35/00, C08L 39/00

(54) **TEMPERATURE ZONE SPECIFIC PRESSURE-SENSITIVE ADHESIVE COMPOSITIONS, AND ADHESIVE ASSEMBLIES AND METHODS OF USE ASSOCIATED THEREWITH**
TEMPERATURZONEN SPEZIFISCHE DRUCKEMPFINDLICHE KLEBMITTELZUSAMMENSETZUNGEN, KLEBMITTELGEBINDE UND DAMIT VERBUNDENE VERFAHREN ZU IHRER BENUTZUNG
COMPOSITIONS ADHESIVES AUTOCOLLANTES AGISSANT SPECIFIQUEMENT DANS CERTAINES ZONES DE TEMPERATURE, ENSEMBLES ADHESIFS ET PROCEDES D'UTILISATION DE CES ELEMENTS

(30) Priority: 12.02.1991 US 654723; 07.02.1992 US 829494
(43) Date of publication of application: 01.12.1993
(73) Proprietor: LANDEC CORPORATION, Menlo Park California 94025 (US)
(72) Inventor: SCHMITT, Edward, E., Palo Alto, CA 94306 (US); TSUGITA, Ross, Sunnyvale, CA 94086 (US)
(74) Representative: Lunt, Mark George Francis
(86) International application number: PCT/US92/01153
(87) International publication number: WO 92/13901

(56) References cited:
- EP-A- 0 119 699
- WO-A-86/05503
- GB-A- 2 097 410
- GB-A- 2 223 023
- US-A- 3 644 252
- US-A- 4 033 918
- US-A- 4 082 705
- US-A- 4 143 858
- US-A- 4 186 258
- US-A- 4 778 852
- US-A- 4 835 199
- US-A- 4 973 615
- PATENT ABSTRACTS OF JAPAN vol. 10, no. 23 (C-325)(2080) 29 January 1986 & JP-A-60 177 085 (DAINIC K.K.) 11 September 1985

## Description

This invention relates to pressure sensitive adhesives (PSAs).

PSAs are well known. They are used in the form of solvent-free layers on backings. The backings are often flexible. An article which comprises a solvent-free PSA layer on a backing is referred to herein as a PSA composite. The PSA layer is tacky at the temperature at which it is used, i.e. the PSA composite will bond immediately to many dissimilar substrates when pressed against the substrate by finger pressure. It is often desirable to remove a PSA composite from the substrate to which it is bonded. In such cases, it is usually important that the PSA layer has a combination of adhesion, cohesion, flexibility and elasticity such that the PSA composite can be removed "cleanly" from the substrate, i.e. without leaving any residue on the substrate.

Publications which disclose known adhesives include Encyclopedia of Polymer Science and Engineering 13, 345-368, Wiley, 1988 (S.C. Temin), Handbook of Pressure- Sensitive Adhesive Technology, Van Nostrand 1982 (Donatos Satas), Adhesives Technology Handbook, p. 154-156, Noyes 1985 (Landrock), Handbook of Adhesive Bonding, p. 8-1 to 8-17, McGraw-Hill, 1982 (C. V. Cagle), U.S. Patent Nos. 3,284,423, 3,299,010, 3,535,195, 3,635,754, 3,690,937, 3,838,079, 3,922,464, 3,935,338, 3,956,223, 4,140,115, 4,143,858, 4,151,319, 4,186,258, 4,152,189, 4,335,026, 4,356,222, 4,487,872, 4,728,572, 4,762,888, 4,783,354 and 4,879,178, UK Patent No. 870022, PCT Publication No. WO 84/03837, European Patent Publication Nos. 0062682 and 0119699, and Japanese Patent Application Nos. 1240589, 56039014, 84003966 and 59093771.

A problem which arises with many PSA composites is that the bond to the substrate changes with time, so that the composite cannot be removed cleanly. Another problem is that the bond strength (either immediately or after the passage of time) is so high that the backing cannot be removed without damage to the backing or the substrate. The term "bond strength" denotes the force required to separate the PSA composite from the substrate. This is particularly important for medical PSA composites which are placed on human skin.

We have discovered PSAs which mitigate these problems. Over a particular range of temperatures (referred to herein as the Normal Use Temperature Zone or NUTZ), the novel PSAs are tacky, or, even if not tacky, retain good bond strength after having been applied to a substrate while tacky. Thus the PSA, once applied, may maintain its bond strength over a wider temperature range (especially at lower temperatures), than the range over which it is tacky. However, after the composites have been heated to a temperature above the NUTZ, or after they have been cooled to a temperature below the NUTZ, or both, their adhesive strength diminishes, without a corresponding reduction in their cohesive strength. As a result, they can be easily and cleanly removed from the substrate.

The novel PSAs used in this invention comprise an intimate admixture of a major proportion of a polymeric pressure sensitive adhesive component (referred to herein by the abbreviation PSAC) and a minor proportion of a relatively low molecular weight crystalline polymer additive (referred to herein by the abbreviation CA), which is partially miscible with the PSAC, all as further defined below.

The CA has a first order transition point or melting point which can be determined using a differential scanning colorimeter and which is referred to herein by the abbreviation Tₘ. The Tₘ of the CA defines the median temperature of the NUTZ. For example, if the CA is a polymer of a C₁₄ acrylate, which has a Tₘ of about 20°C, the NUTZ is centered a few degrees below 20°C. The amount of the CA has surprisingly little effect on the position or the breadth of the NUTZ, but does greatly influence bond strength within and above the NUTZ. Optimum amounts can be determined on a case-by-case basis. For example, to obtain a PSA having a NUTZ of 20 to 40°C, one would select a CA which is partially miscible with the PSAC and has a Tₘ of about 30°C, and use an amount of the CA giving a NUTZ of 20 to 40°C.

None of the prior documents referred to above disclose that the addition to a PSA of a low molecular weight polymeric additive will result in a PSA whose bond strength is temperature dependent.

In a first preferred aspect, this invention relates to a PSA composite which (i) can be affixed to a substrate at a temperature within a normal use temperature zone (NUTZ) having a minimum temperature and a maximum temperature; and (ii)comprises
(A) a backing, and
(B) coated on the backing, a solvent-free layer of a pressure-sensitive adhesive composition which (i) over a temperature range encompassed by the NUTZ, maintains at least some tack and retains both adhesive and cohesive strength when bonded to a substrate; and (ii) comprises:
   (1) p% by weight, based on solids, of a polymeric pressure-sensitive component (PSAC); and
   (2) q% by weight, based on solids, of a crystalline polymer additive (CA) which
      (a) is partially miscible with the PSAC,
      (b) has a heat of fusion (ΔH_{f})of at least 20 Joules/g,
      (c) is intimately admixed with the PSAC, and
      (d) has a molecular weight (M_{w}) less than about 25,000 Daltons;
p being 50 to 99.5, and q being 0.5 to 50 when the CA is an acrylic polymer, and p being 50 to 99 and q being 1 to 50 when the CA is not an acrylic polymer; whereby, when the PSA composite is bonded to a substrate at a temperature within the NUTZ, the strength of the bond between the PSA composite and the substrate can be reduced by (i) heating the composition above the maximum temperature of the NUTZ or (ii) cooling the composition below the minimum temperature of the NUTZ.

In a second preferred aspect, this invention provides a process for removing a PSA composite from a substrate to which it is adhered, the PSA composite being a PSA composite according to the first preferred aspect of the invention, said process comprising
(A) heating the PSA composite to a temperature above the maximum temperature of the NUTZ, or cooling the PSA composite to a temperature below the minimum temperature of the NUTZ, thereby reducing the bond strength between the PSA composite and the substrate; and
(B) removing the PSA composite from the substrate.

Parts and percentages given in this specification are by weight unless otherwise noted. Tack values given in this specification are measured by the Tack Rolling Ball Test (ASTM D3121 and PSTC-6, 8/85 revision). The tack of a layer of a particular PSA generally increases with thickness, especially at thicknesses less than 0.127 mm (0.005 inch). Normalized tacks of (a) more than 10⁻², (b) 10⁻² to 10⁻³, and (c) less than 10⁻³ cm⁻² are referred to herein as (a) "tacky", (b) "slightly tacky", and (c) non-tacky", respectively.

### The Polymeric Pressure-Sensitive Adhesive Component (PSAC)

The PSAC should not of course interact with the CA in a deleterious manner. It is preferably a material which exhibits the characteristics of a PSA at room temperature. Such PSACs may consist of one or more polymers or may also contain plasticizers, tackifiers, fillers, stabilizers and the like. Examples of such PSACs are natural rubber adhesives; styrene/butadiene latex-based adhesives; thermoplastic rubbers of the A-B-A block copolymer type (where A represents a thermoplastic polystyrene end block and B represents a rubber midblock of polyisoprene, polybutadiene or poly(ethylene/butylene)); butyl rubber; polyisobutylene; acrylic adhesives such as polyacrylates and vinyl acetate/acrylic ester copolymers; and polymers and copolymers of vinyl ethers such as polyvinylmethyl ether, polyvinylethyl ether, and polyvinylisobutyl ether.

The PSAC can also be a material which is not a PSA at room temperature but becomes a PSA at or below the temperature at which the novel PSA is used. Thus it may exhibit nonadhesive rubbery, glassy or crystalline properties at room temperature, yet upon warming become tacky and adhesive. Such a PSAC is referred to herein as "precursor PSAC". A precursor PSAC must show, in combination with the CA, resistance to flow at the elevated temperature at which it is used, which is referred to herein as the elevated use temperature zone or EUTZ. Such resistance to flow can result from covalent or ionic crosslinking, incorporation of block copolymers, strong hydrogen bonding, polymer chain entanglement, use of high glass transition comonomers, and other known expedients.

The transition of a precursor PSAC from a non-PSA to a PSA can result from its own characteristics, e.g. its melting point, in which case the transition preferably takes place several degrees below the melting point of the CA. Above the EUTZ, the CA melts and reduces the adhesive strength, making it possible to remove the PSA composite from the substrate easily and cleanly. Alternatively, the transition of the precursor PSAC from a non-PSA to PSA can result from melting of the CA, the molten CA then acting as a plasticizer for the precursor PSAC and rendering it tacky without lowering its resistance to flow.

Examples of precursor PSAs are Elvax 240, other polyolefin-based adhesives and polystyrene which become PSAs above their crystalline melting point or glass transition temperature. For example, Elvax 240 is a PSA at temperatures above about 60°C and at this temperature can be used to bond an article to a substrate. If a CA having a Tₘ about 70°C has been mixed with the Elvax, heating to above 70°C results in clean bond failure. Another example of a precursor PSAC is polystyrene which has been lightly crosslinked with, for example, divinyl benzene. Such a precursor PSAC has a T_{g} of about 100°C and will be a PSA above about 100°C., If a CA having a Tₘ of 120°C is mixed with this precursor PSAC, the combination will have a lower adhesive strength above 120°C than at, say, 110°C.

### The Crystalline Polymer Additive (CA)

The CA is a crystalline polymer (this term being used to include oligomers) having a molecular weight (M_{w}) of at most 25,000, preferably 3,500 to 25,000, more preferably 3,500 to 12,000. M_{w}s given herein are measured by gel permeation chromatography (GPC) and are expressed in Daltons. The CA preferably melts over a range of less than 10°C, particularly less than 5°C.

The CA is intimately admixed with the PSAC, i.e. is physically mixed with the PSAC in a thorough and pervasive manner which creates a three-dimensional physical network of the polymers. After the CA and PSAC have been admixed, the CA is partially miscible with the PSAC, i.e. at least part of the admixture has one phase in which both components are present. Other phases may be present. Partial miscibility of the CA and PSAC may be evidenced by (a) cosolubility in common solvents, (b) clarity of heated films of the admixture (with extremely clear films indicating almost complete miscibility), or (c) depression of the melting point of the CA, indicating at least partial cocrystallization. Table D in the Examples below gives specific examples of the depression of the melting point of the CA when it is admixed with the PSAC. At temperatures below the melting point of the CA, the CA is phase-separated from the PSAC.

The relative solubility parameters (or polarities) of the CA and the PSAC appear to be important in producing the temperature-variable properties of the PSA. We have found that for certain metallic substrates, optimum behavior of the PSA is obtained when the solubility parameter of the CA (δ₂) is greater than or equal to (δ1 - 0.5) and less than or equal to (δ₁ + 1.5), where δ₁ is the solubility parameter of the PSAC, δ₁ and δ₂ being expressed in J^{0.5}/cm^{1.5}. A similar relationship is believed to exist for other substrates. Solubility parameters given herein are calculated using group contributions according to Fedors (D. W. van Krevelen, Properties of Polymers, Elsevier, 2nd Edn, p. 138).

The CA is preferably a side chain crystallizable (SCC) polymer, but can be a main chain crystallizable (MCC) polymer. Preferred SCC polymer CAs contain recurring units having the structural formula 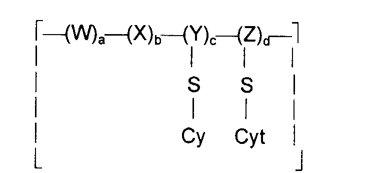 wherein W and X are each respectively a first and a second monomer unit, which monomer unit may be any molecular moiety connectable to an adjoining molecular moiety (i.e., polymerizable), Y and Z are each independently a backbone monomer unit which may be any molecular moiety or atom, each S is independently a linking group or spacer unit and is optionally present, Cyt and Cy are independently a crystallizable moiety connected to the respective backbone directly or via the spacer unit, and a, b, c, and d are each, independently, integers ranging from 0 to 1,000, with the proviso that sufficient Cyt and Cy are present so as to provide an M_{w} which is equal to or greater than twice the sum of the M_{w}s of W, X, Y and Z, and further wherein the polymers have a ΔH_{f} of at least about 20 J/g. When a, b, c and d are greater than 1, W, X, Y and Z can be repeating units or mixtures of different monomer units. For example, if a is 100, W could be a mixture of styrene, vinyl acetate, acrylic acid, methyl styrene and hexadecyl acrylate in ratios of 5:5:2:5:83. Thus, any of W, X, Y and Z can be mixtures of polymerizable monomers.

The backbone of the polymer (defined by W, X, Y and Z) may be any organic structure (aliphatic or aromatic hydrocarbon, ester, ether, amide, etc.) or an inorganic structure (sulfide, phosphazine, silicone, etc.). The spacer linkages can be any suitable organic or inorganic unit, for example ester, amide hydrocarbon, phenyl, ether, or ionic salt (for example a carboxyl alkyl ammonium or sulfonium or phosphonium ion pair or other known ionic salt pair). The side-chain (defined by Cyt and Cy and the optional S) may be aliphatic or aromatic or a combination of aliphatic side-chains of at least 10 carbon atoms, fluorinated aliphatic side-chains of at least 6 carbons, and p-alkyl styrene side-chains wherein the alkyl is of 8 to 24 carbon atoms.

The length of each side chain moiety is usually greater than 6 times the distance between side-chains in the case of acrylates, methacrylates, vinyl esters, acrylamides, methacrylamides, vinyl ethers and alpha olefins. In the extreme case of a fluoroacrylate alternate copolymer with butadiene, a side chain can be as little as 2 times the length of the distance between branches. In any case, the side-chain units should make up greater than 50% of the volume of the polymer, preferably greater than 65% of the volume. Comonomers added to a SCC polymer usually have an adverse effect on crystallinity. Small amounts of various comonomers can be tolerated ,usually up to 10 to 25 volume percent. In some cases it may be desirable to add a small amount of comonomers, for example cure site monomers such as acrylic acid, glycidal methacrylate, maleic anhydride, amino functional monomer and the like.

Examples of SCC polymers as mentioned above are the acrylate, fluoroacrylate, methacrylate and vinyl ester polymers described in J. Poly. Sci. 10:3347(1972); J. Poly. Sci. 10:1657(1972); J. Poly. Sci. 9:3367(1971); J. Poly. Sci. 9:3349(1971); J. Poly. Sci. 9:1835 (1971); J.A.C.S. 76:6280 (1954); J. Poly. Sci. 7:3053 (1969); Polymer J. 17:991 (1985); corresponding acrylamide, substituted acrylamide and maleimide polymers (J. Poly. Sci., Poly. Physics Ed. 18:2197 (1980); poly (α-olefin) polymers such as those described in J. Poly. Sci.: Macromol. Rev. 8:117-252 (1974), and Macromolecules 13, 12 (1980), polyalkylvinyl ethers, polyalkylethylene oxides such as those described in Macromolecules 13:15 (1980), alkyphosphazene polymers, polyamino acids such as those described in Poly. Sci. USSR 21:241 (1979), Macromolecules 18:2141 (1985), polyisocyanates such as those described in Macromolecules 12:94 (1979), polyurethanes made by reacting amine- or alcohol-containing monomers with long-chain alkyl isocyanates, polyesters and polyethers, polysiloxanes and polysilanes such as those described in Macromolecules 19:61 (1986), p-alkylstyrene polymers such as those described in J.A.C.S. 75:3326 (1953) and J. Poly. Sci. 60:19 (1962), and triglycerides such as tristearin or pentaerythritol tetrastearate.

Particularly preferred SCC polymer CAs are linear aliphatic C₁₄-C₅₀ acrylates, linear aliphatic C₁₄-C₅₀ methacrylates, linear aliphatic C₁₄-C₅₀ acrylamides, and linear aliphatic C₁₄-C₅₀ methacrylamides. Most preferred within this group are linear aliphatic C₁₆-C₂₂ acrylates, linear aliphatic C₁₆-C₂₂ methacrylates, linear aliphatic C₁₆-C₂₂ acrylamides, and linear aliphatic C₁₆-C₂₂ methacrylamides. The Tₘs of the polymers of C₁₄, C₁₆, C₁₈, C₂₀, C₂₂, C₃₀, C₄₀ and C₅₀ acrylates are 20°C, 36°C, 49°C, 60°C, 71°C, 76°C, 96°C, and 102°C, respectively. The Tₘs of polymers of C₁₄, C₁₆, C₁₈, C₂₀, C₂₂, C₃₀, C₄₀ and C₅₀ methacrylates are 10°C, 26°C, 39°C, 50°C, 62°C, 68°C, 91°C, and 95°C respectively.

The CA may also be an MCC polymer, i.e. a polymer which is rendered crystallizable by its backbone structure. Preferred MCC polymers include water insoluble polyalkylene oxides, lower alkyl polyesters, polyamides, nylons and polytetrahydrofuran. Particularly preferred MCC polymers are poly-α-olefin polymers containing recurring units having the structural formula

[-CH₂ - CH(R)-],

wherein R is hydrogen or C₁-C₁₂ linear or branched alkyl, more preferably C₁-C₈ linear or branched alkyl. R may be, for example, hydrogen, methyl, propyl, butyl, pentyl, 4-methyl pentyl, hexyl and heptyl.

CAs useful herein may be obtained commercially or they may be chemically synthesized. For methods of synthesizing SCC polymers, reference may be made to E. G. Jordan et al., "Side Chain Crystallinity II", J. Polym. Sci., Part A-1, 9:3351 (1971). Particular methods of making crystalline polymers are also described in detail in the examples herein.

Hydrophilic monomers are beneficially incorporated in the polymer if it is desired to increase the MVTR properties of the adhesive. Commonly used hdryophilic comonomers include acrylic acid, acrylamide, hydroxy alkyl (meth) acrylates such as hydroxy ethyl acrylate, hydroxy ethyl methacrylate and hydroxy butyl acrylate, alkoxy (meth) acrylates such as ethoxy ethyl acrylate, ethoxy ethoxy ethylacrylate, ethyltriglycol methacrylate, 3-methoxy butylacrylate and the like. A preferred class of high MVTR inducing monomers are derivatives of polyethylene glycol with molecular weights ranging from 50 to 5,000. Commonly these units may be incorporated either into the backbone or as pendant groups.

### Amounts of PSA component (PSAC) and Crystalline Additive (CA)

The composition generally contains 50 to 99%, preferably 65 to 95%, more preferably 70 to 90%, most preferably 70 to 80% of the PSAC, and 1 to 50%, preferably 5 to 35%, more preferably 10 to 30%, most preferably 20 to 30% of the CA. With some systems less CA is needed. For example, when the CA is an acrylic polymer, the composition can contain as little as 0.5 to 1% of the CA. Additives can also influence the amount of CA required; for example the incorporation of a plasticizer or tackifier, e.g. polybutene, can reduce the quantity of CA needed.

The NUTZ is dependent on the nature and the amount of both the CA and the PSAC. The lower and upper limits of the NUTZ are generally -10°C or more and 120°C or less, respectively, and the NUTZ is usually a relatively narrow range well within the range -10 to 120°C.

### Other Ingredients of the PSA

The novel PSAs may contain, in addition to the PSAC and CA, conventional additives such as tackifiers (wood rosin, polyesters, etc.), antioxidants, fibrous or nonfibrous fillers and colorants. It is also possible to include additional adhesive components and/or additional crystalline materials providing that the desired NUTZ profile is not significantly affected. The MVTR and/or absorptive properties of the PSA may also be modified by the incorporation of soluble or insoluble hydrophilic materials, e.g. carboxymethyl cellulose, guar gum, carrageenan, or cellulose-based or synthetic fibers.

### Preparation of the PSA

The novel PSAs can be prepared by mixing the PSAC and CA in a compatible solvent, and adding any other desired components, e.g. plasticizers, tackifiers and fillers. The solids content is adjusted to the desired viscosity, and the mixture is blended until it is homogeneous. Bubbles are removed from the mixture after blending. Specific procedures are described in the Examples below. Particularly when the PSA composite is to be applied to a porous substrate, the PSA is preferably crosslinked by any known technique, e.g. via crosslinking agents or radiation.

### PSA Composites

The PSA composite can be virtually any article which is to be adhered to a substrate for a period of time and then removed from the substrate. The invention is particularly useful for medical articles, i.e. those which are to be adhered to skin, including bandages, tapes, wound dressing, wound closures, transdermal drug delivery devices, EKG electrodes and other monitoring and stimulating electrodes, binding immobilization devices, and tapes for holding IV lines in place. Other articles are masking tapes for use in painting, and removable price and bar code labels, which can be adhered to walls or merchandisable products at room temperature but can be easily removed when heated, for example to more than 45°C, or cooled, for example to less than 15°C.

Human skin normally has a temperature of 32-36°C. By choosing a suitable PSA, a PSA composite can be easily removed by heating it to a temperature above about 40°C without causing the pain, hair removal and epithelial cell damage often caused by conventional PSAs. In adhesive tapes and bandages, the backing can be for example a woven or non-woven fabric, e.g. a woven cloth heated to resist moisture, or a Gortex-type material, paper, or a synthetic film, e.g. films of the polymers sold under the tradename Hytrel by du Pont; films of polyether polyamides, e.g. the material sold by ATO Chemical under the trade name Pebax; films of polyetherpolyurethanes, e.g. the material sold by Goodrich Chemicals under the tradename Estane; films of 1,2-polybutadiene, e.g. those having a thickness of about 150 µm and sold under the tradenames RB810, RB820 and RB83, by Japan Synthetic Rubber; and microporous polyolefin films, e.g. that sold under the tradename Celgard by Hoechst Celanese. Preferably the backing is flexible or stretchable so that it conforms to the skin. Particularly preferred medical articles are tapes and bandages which exclude water and bacteria but allow the exchange of water vapor. For this purpose, the backing preferably has a moisture vapor transmission rate (MVTR) greater than 500. MVTRs given in this specification are measured at 37°C and at a 100% to 10% relative humidity difference, and are expressed in g/m²/day. The MVTR of the backing will depend on its thickness. For example, a sheet of Estane 25 µm thick has an MVTR of about 1800 and is suitable for use as a backing. The PSA can reduce the MVTR of the backing. The PSA composite preferably has an MVTR of more than 100, and the PSA has an MVTR of at least 300, particularly at least 500. If the shape of the bandage is for example a large rectangle, the PSA can be applied in strips along the edges of the bandage, so that the PSA will not affect the MVTR of the majority of the bandage, where no adhesive is present.

### Preparation of PSA Composites

The novel PSA composites can be prepared by applying the novel PSA, either neat or in a solvent, to the backing, in any number of ways, e.g. by spraying, painting, dipping or rolling, or by transfer from a release sheet (as in transfer painting).

### Substrates

The substrate may be porous, i.e. permit significant penetration of the PSA below the surface thereof; for example it may be skin (i.e. live human or animal skin or mucosal tissue), paper, wood or "Tyvec" sheeting. Alternatively, the substrate can be non-porous; for example it may be glass, plastic, metal or an enamel coating. For nonporous substrates, an article bonded to the substrate can be removed by cooling to below the NUTZ, e.g. by application of ice or a cold pack, or by heating to above the NUTZ. For porous substrates, an article bonded to the substrate can be removed by heating above the NUTZ, but cannot be removed by cooling to below the NUTZ unless the PSA composition is one that has been cured (crosslinked) to a slight but sufficient degree, so as to prevent significant penetration of the PSA into the substrate.

### Application of PSA Composites to Substrates

The novel PSA composite is applied to the substrate at a temperature at which the PSA is tacky, and will then bond well to the substrate while the temperature remains within the NUTZ, but can be easily and cleanly removed if cooled below the NUTZ, e.g. to less than 15°C, or heated above the NUTZ, e.g. to more than 45°C.

### EXAMPLES

The invention is illustrated by the following Examples, some of which are comparative examples, and in which the following materials were used.

### PSACs

SBR1 A styrene/butadiene rubber (SBR) PSA which is available as a solution (solids contents about 45%) from Morton International under the trade name Morstik 103.

SBR2 A styrene/butadiene rubber PSA which is available from Morton International under the trade name Morstik 112.

PSL A silicone PSA supplied by Dow Chemical under the trade name X7-4201.

AC1 An acrylic PSA which is available from Monsanto Chemical as a solution under the trade name Gelva 737. The solvent system is ethyl acetate (53%), toluene (11%) and ethanol (36%).

AC2 An acrylic PSA which is available as a solution from Morton International under the trade name Morstik 607.

AC4-6 Copolymers of the monomers and amounts thereof set out in Table A below. Table A also shows the molecular weight and solubility parameter of each resin, and in some cases, the solubility parameter.

Resin AC5 was made as follows. The two monomers, and azoisobutyronitrile (AIBN) as initiator, about 0.5 part, were combined in ethyl acetate (150 parts), and heated under nitrogen for 16 hours at about 70°C.

**TABLE A**

| PSAC No. AC | 4 | 5 | 6 |
|---|---|---|---|
| 2-ethyl hexyl acrylate | 70 | 95 | 95 |
| acrylic acid | 5 | 5 | 5 |
| ethoxy ethyl acrylate | 25 | - | - |
| 2-hydroxy ethyl acrylate | - | - | - |
| | | | |
| Molecular Weight (K) | 741 | 603 | 694 |
| Solubility parameter (δ₁) | 18.41 | 18.2 | - |

### Additives

- PB: Polybutene, available from Amoco under the trade name Polybutene H100.
- LAN: Lanolin (100% solids)
- EIC: Eicosane
- PHMS: Polymethylhexadecyl siloxane, M_{w} 10,000, Tₘ 35°C, available from Huls under the trade name PS-135.
- SCC 1-11: CAs SCC 1-11 were copolymers of the monomers and amounts thereof set out in Table B below. Table B also shows the molecular weight and crystalline melting point (Tₘ) of each of these additives, and in some cases, the solubility parameter.

CA SCC1 was made as follows. Octadecylacrylate (425g), butylacrylate (65g), acrylic acid (10.5 g), azobisisobutyronitrile (AIBN) (5 g), and dodecyl mercaptan (25 g) were combined in toluene (1000 ml), purged with nitrogen and reacted for 12 hours at 80°C. The resulting solution was precipitated into methanol. Additives SCC 2-5 were made by the same general procedure. Additives SCC 6-10 were made by reacting the ingredients shown in Table B at 100°C under nitrogen for 2.5 hours, using t-butylperoctate (available from Witco Chemical under the trade name Esperox 28) as initiator and dodecyl mercaptan (5 parts). The resulting polymers were precipitated in methanol.

**TABLE B**

| CA No. SCC | 1 | 2 | 3 | 4 | 5 | 6 | 7 | 8 | 9 | 10 | 11 |
|---|---|---|---|---|---|---|---|---|---|---|---|
| Octadecyl Acrylate | 85 | 94 | 97 | - | 94 | 85 | 80.8 | 78.6 | 76.5 | 72.25 | 96 |
| Butyl Acrylate | 13 | 6 | 3 | - | 6 | 13 | 14.2 | 13.9 | 13.5 | 12.75 | 4 |
| Docosyl Acrylate | - | - | - | 100 | - | - | - | - | - | - | - |
| Hexadecyl Acrylate | - | - | - | - | † | - | - | - | - | - | - |
| Acrylic Acid | 2 | - | - | - | - | 2 | 5 | 7.5 | 10.0 | 15 | - |
| Molecular Weight (K) | 7.9 | 6.1 | 6.5 | 7.5 | | 8 | 8.7 | 9.1 | 9.0 | 8.2 | 6 |
| Tₘ(°C) | 41.6 | 44.7 | 45.1 | 71 | 29 | 40.2 | 40.4 | 43.3 | 43.3 | 42.6 | 45 |
| Solubility Parameter (δ₂) | - | - | - | - | - | 18.15 | 18.6 | 18.93 | 19.22 | 19.72 | - |

| | | | | | | | | | | | |
|---|---|---|---|---|---|---|---|---|---|---|---|
| † In making Additive SCC 6, sufficient hexadecyl acrylate was used to reduce the melting point of the product to about 29°C. | | | | | | | | | | | |

### Compositions

A number of compositions were made as follows. A PSAC and one or more additives as specified in Table C below were placed in a glass jar, together with appropriate solvents. The additives were presolvated in heptane at 50% solids. Table C shows the amount of each additive (when free of solvent). The amount of the PSAC (as solids) is 100-x, where x is the stated amount of the additive(s). In some of the compositions, no CA was present. Toluene was added to reduce the solids content of the composition to about 45%. Using a vortex mixer, the ingredients were blended until a homogeneous solution was obtained, and the blend was then placed on a roller mill to remove all gas bubbles. In Example Q10, heat was used in the blending process.

When the PSAC was an acrylate PSA dissolved in a solvent system containing at least one polar solvent, the polar solvent had to be removed in order to incorporate the CA. The polar solvent was, therefore, removed by rotary vacuum evaporation and replaced by a nonpolar solvent. Preferably the polar solvent(s) was replaced by adding an amount of toluene equal to the amount of the polar solvents, and subjecting the resulting mixture to rotary vacuum evaporation at a temperature below 45°C, preferably below 40°C, and at 60-76 cm Hg pressure until the mixture returned to its original weight. The solvent systems used in the Examples were as follows:

| | |
|---|---|
| Examples A04, B02 toluene | |
| Example Q03 | hexane/toluene/cyclohexane (64/23/13) |
| Example Q06 | hexane/toluene/cyclohexane (76/12/12) |
| Example Q04 | hexane/toluene/cyclohexane (69/20/11) |
| Example Q09 | hexane/toluene/cyclohexane (62/24/14) |
| Example Q08 | hexane/toluene/cyclohexane (55/31/14) |
| Example Q10 | xylene |
| Example A01 | ethyl acetate/ethanol/toluene (48/40/12) |
| Example B01 | ethyl acetate/isopropanol/pentadione |
| Example Q01 | ethyl acetate/cyclohexane (80/3/17) |
| Example Q02 | hexane/toluene/cyclohexane (69/17/14) |

### Application of Compositions to Backings

Except in Examples A02, A03 and A05, the resulting compositions were placed on film backings as identified in Table C, in the following way. The film was secured to a flat glass plate 18 x 12 inch (46 x 30.5 cm) and smoothed to remove air bubbles between the film and the plate. The film was a polyethylene terephthalate ("Mylar") film, 1.0 mil (0.0025 cm) thick, except in Example R01 where it was 2.3 mil (0.0058 cm) thick, or a polyester thermoplastic elastomer ("Hytrel" 4056) film, 1.75 mil (0.0045 cm) thick. A No. 70 wire-wound applicator rod (No. 70 Gardco Wet Film Applicator Rod) was then used to apply a coating of the composition to the film . The rod was placed at one end of the film; a bead of the composition was poured along the length of the rod; the rod was pulled through the solution over the film, without allowing the rod to rotate and without applying pressure, so that the rod contacts the film under its own weight. Except in Example Q10, the coating was dried in air at room temperature for 10 minutes and then in an oven at 90°C for 15 minutes or more, followed by cooling for 0.5 to 0.75 hour at room temperature. In Example Q10, the backing was heated, and the oven was at 130°C. The dried coating thickness was about 1.6 to 1.8 mil (0.0040 to 0.0046 cm) in Examples A01-A04, B01, B02, Q01-10, and Z3, about 1.5 mil (0.0038 cm) in Examples Z1 and Z2, and about 1 mil (0.0025 cm) in the other Examples. The coating was covered with a siliconized release sheet. The release sheet was a siliconized Mylar film when the backing was the Mylar film, and a siliconized polyethylene-impregnated paper when the backing was the Hytrel film. The resulting laminate was removed from the glass plate and samples about 5.0 x 1.0 inch (12.5 x 2.5 cm) were cut from the laminate. In Examples A01-A05 and B01 - B02 the coatings were done using the transfer coating method.

### Testing of the Coated Backings

Samples prepared in the way described above were tested in one or both of the following procedures.

### Peel Tests on Human Skin as the Substrate

An Instron Materials Testing Instrument (IMTI) was used to conduct peel strength tests on samples applied to human skin. Two samples were placed on the underside of the forearm of an adult, with the length of the strips parallel to the arm bone. Light hand pressure was applied to the entire surface of the strips. After about 4 hours, the peel strength of each strip was measured by connecting the strip via a clip and a wire, to the load cell of an IMTI and then removing the strip by peeling it off at a rate of 10 inch (25.4 cm) per minute, the strip being bent back over itself at an angle of about 180°. One of the strips was removed at room temperature; the other was warmed with a hair dryer to a temperature of about 40°C before it was peeled off. The average peel strength was recorded for the strip at room temperature (LT) and for the heated strip (HT).

### Peel Tests on Other Test Surfaces as Substrates

Peel tests on other test surfaces were conducted by the test procedure designated PSTC-1 (revision 8/85) by the Pressure-Sensitive Tape Council (PSTC), using an Instrumentors Inc. SP-102B Slip/Peel Tester. The test surface was (a) stainless steel as specified in Appendage B of the PSTC Test Methods for Pressure-Sensitive Tapes, referred to herein as SS, or (b) a polyurethane film 0.012 inch (0.03 cm) thick (available under the trade name Tuftane from Lord Corporation, Erie, Pennsylvania), referred to herein as PU. The test surface was secured with double-sided adhesive tape to the temperature-controlled platen. The sample was immediately pressed against the test surface by means of a 4.5 lb. (2 kg) roller which travelled over the sample in both directions at a rate of 12 inch (30 cm) per minute in both directions. The peel strength was measured by peeling the PSA composition from the substrate at an angle of about 180° and a speed of about 30.5 cm/min (12 inch/min). The peel strength was measured in Examples A01, A02, A03, A04, A05, B01, B02, Q01, Q02, Q03, Q04, Q06, Q08, Q09, Q10 at a temperature LT which is 4°C below the melting temperature of the incorporated CA and within the NUTZ, and at a temperature HT which is 4°C above the melting temperature of the incorporated CA and above the NUTZ. Ten samples were tested at each temperature and the peel strengths averaged. The PSACs in the PSAs did not undergo any phase changes over this range. The samples were tacky at LT, except where the peel strength at LT is followed by the notation NT. In Examples P01, R01B and F01-F05 the peel strengths were measured at 30°C (LT) and 45°C (HT). In Examples R02-R06, the peel strengths wre measured at 30°C (LT) and 42°C (HT). In Example R01A the peel strengths were measured at ambient temperature (LT) and after warming (HT).

The peel strength of a layer of a particular PSA generally increases with thickness, especially at thicknesses less than 0.127 mm (0.005 inch). Peel strengths are given in g/cm and, except where otherwise noted, are for PSA layers having a thickness (dried) of 0.041 to 0.046 mm (0.0016 to 0.0018 inch).

The results obtained are set out in Table C below, in which the comparative examples are marked with an asterisk *.

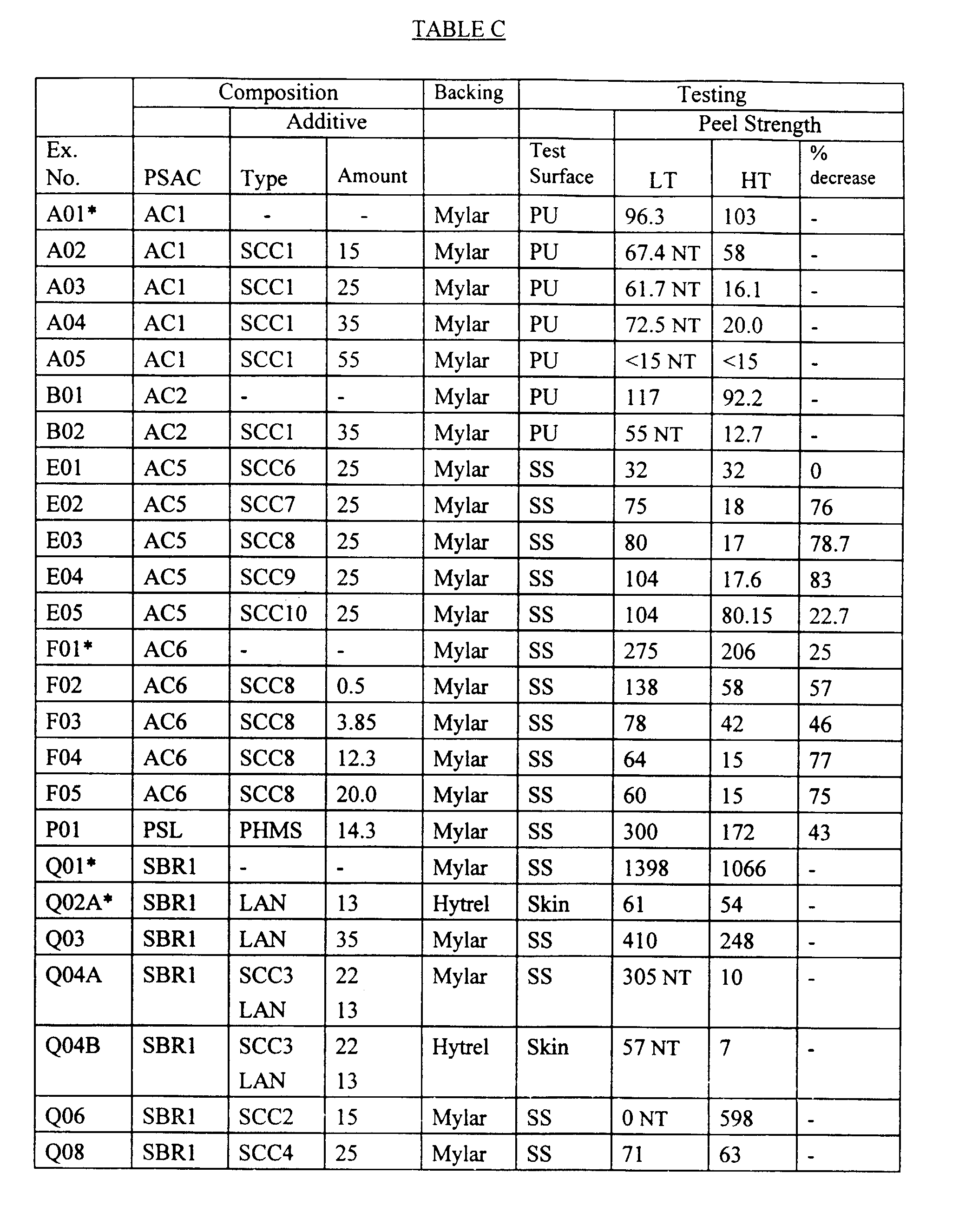

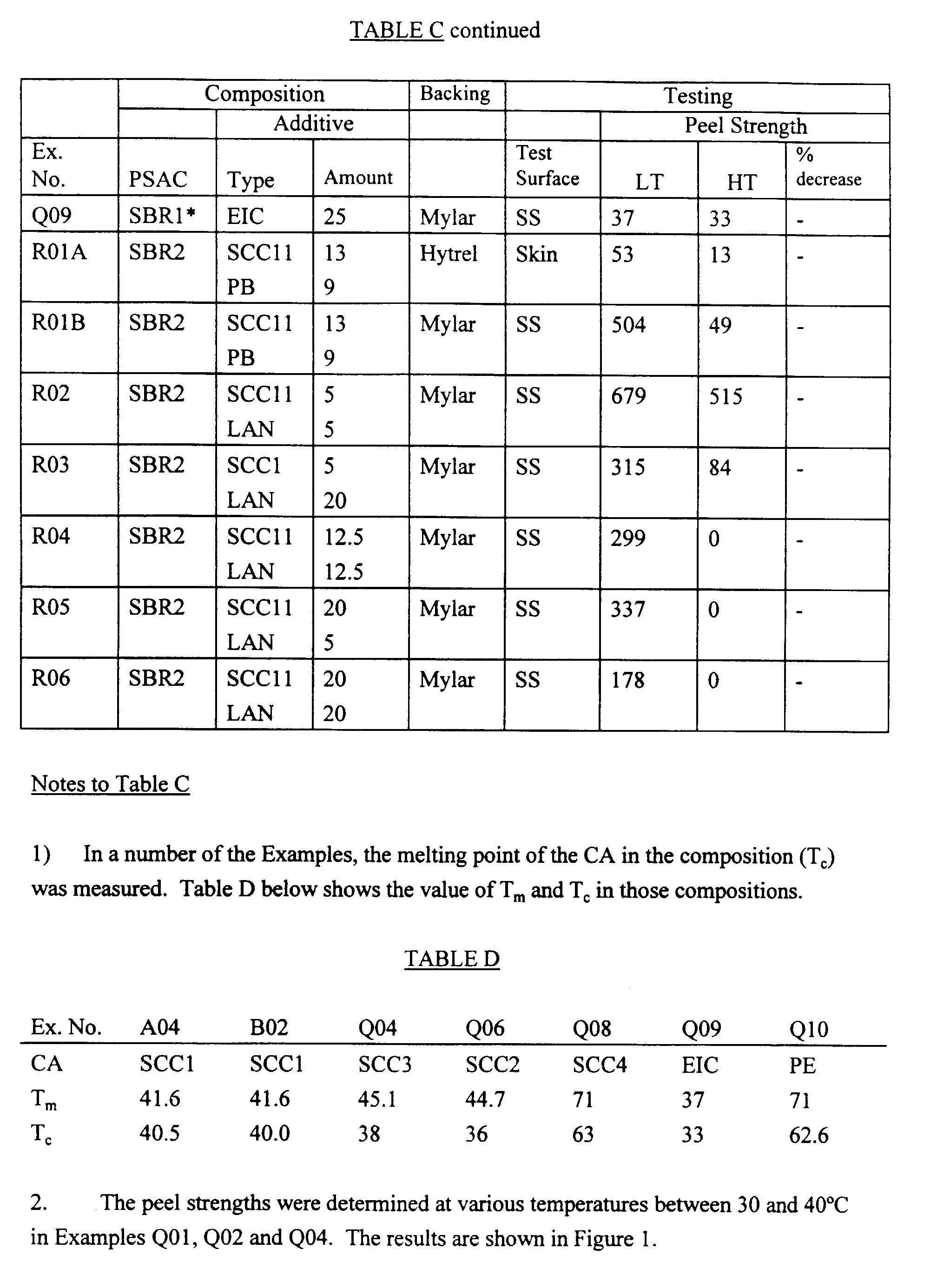

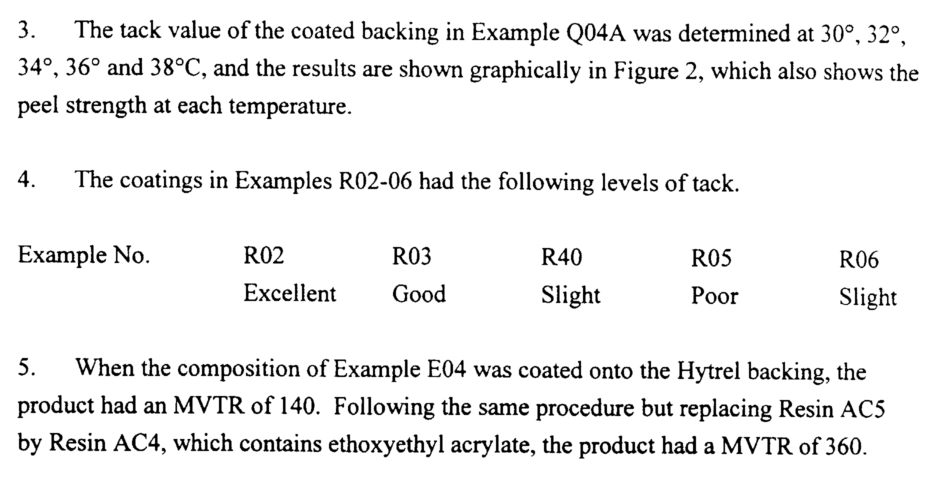

### Example Z1

The composition of Example Q04 was used to make a film 1.5 mil (0.00375 cm) thick on a siliconized release film. The back of a 3x5 inch (7.5 x 12.5 cm) photograph was lightly sanded, and the adhesive film placed against the sanded surface. The assembly was put in a press at 45°C and 5,000 psi (350 kg/cm²) for 5 minutes. The assembly was removed, and cooled under pressure from a 5 lb. (2.2 kg) weight. Excess adhesive was removed and the release film removed. The adhesive had little or no tack and the assembly could be moved easily over a page in a photograph album. When the assembly reached its final location, it was gently warmed with a hair dryer. The back of the photograph immediately became tacky and the photograph was secured to the page by rubbing the face gently with a clean cloth. It was reheated with the hair dryer for 15 seconds and lightly rubbed again. After cooling for one minute, an attempt to remove a corner of the photograph resulted in tearing of the page below that corner. The same result was obtained the next day, and after storage overnight in a refrigerator, followed by warming to room temperature. When the photograph was reheated with a hair dryer, it could be easily and cleanly removed without damage to the page.

### Example Z2

This example illustrates how the invention can be used to make a tamper-proof label.

A composition containing 65 parts of SBR1, 22 parts of SCC 5 and 13 parts LAN was cast as a film 1.5 mil (0.00375 cm) thick on a silicon release liner. The adhesive film was placed on a sheet of newspaper and the assembly was put in a press at 45°C and 5000 psi (350 kg/cm²) for 5 minutes. After cooling, strips 1 x 2 cm were cut from the assembly, and, after removal of the release film, three strips were applied to each of a glass jar, a plastic pen, a stainless steel panel and a magazine. After one hour, an attempt was made to remove one of the strips from each test surface at room temperature; in all cases, the paper tore during removal. After storage in a refrigerator for one hour, an attempt was made to remove another strip from each test surface; all the strips were successfully removed except the strip on the magazine After heating with a hair dryer, the last strip on each of the surfaces was easily and cleanly removed.

### Example Z3

This example illustrates how the invention can be used to make a bandage which is sufficiently tacky at room temperature to adhere to the skin of a human patient; which adheres to skin at normal body temperatures (e.g. 32-34°C); which maintains its adhesiveness to skin when cooled with ice; and which no longer adheres to skin when heated, thus allowing the bandage to be removed without causing pain to the patient.

Three strips as used in Example Q04B were placed on a moderately hairy portion of one arm of each of three volunteers. The strips were worn for periods of 1, 6 and 24 hours, each subject wearing the three strips for one of the designated periods. One of the strips on each of the volunteers was removed at ambient temperature by pulling from one end of the strip at an angle that was perpendicular to the surface of the arm and at a rate of 2.5 cm (1 inch) second. In all cases, pain was experienced, and hair and cells of the stratum corneum were found on the surfaces of the strips. The second strip on each volunteer was cooled with an ice cube for 10 seconds and then removed in the same way. Pain was reported and a similar amount of cellular debris and hair was found on the surface of the strips. The third strip on each volunteer was heated with a hair dryer before it was removed in the same way. No pain was reported and no cellular debris or hair was found on the surface of those strips.

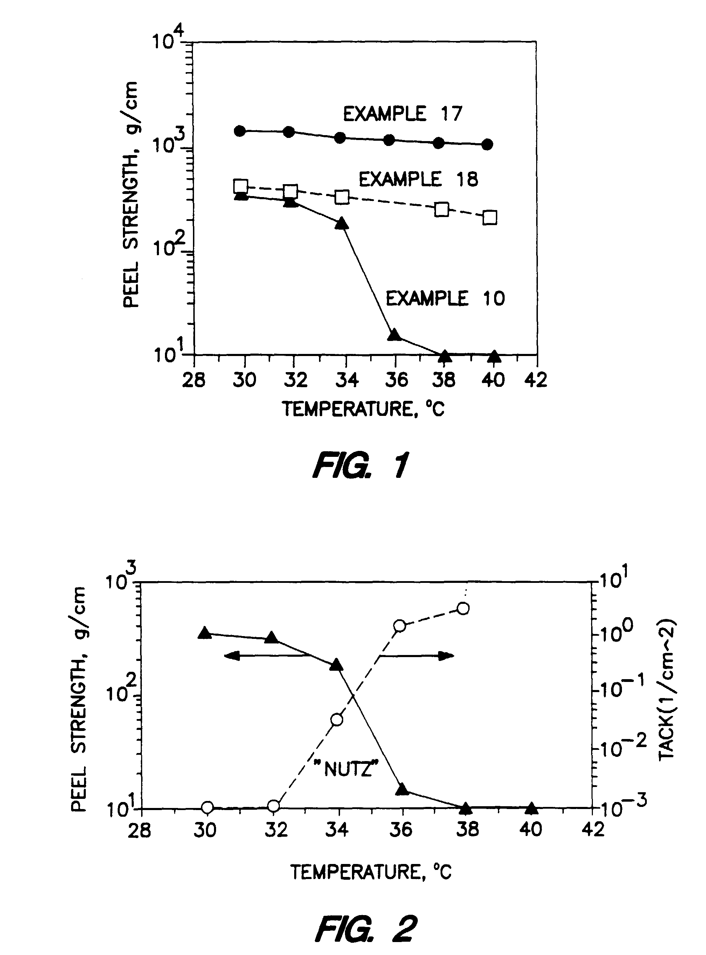

## Claims

1. A PSA composite which (i) can be affixed to a substrate at a temperature within a normal use temperature zone (NUTZ) having a minimum temperature and a maximum temperature; and (ii)comprises
(A) a backing, and
(B) coated on the backing, a solvent-free layer of a pressure-sensitive adhesive composition which (i) over a temperature range encompassed by the NUTZ, maintains at least some tack and retains both adhesive and cohesive strength when bonded to a substrate; and (ii) comprises:
(1) p% by weight, based on solids, of a polymeric pressure-sensitive component (PSAC); and
(2) q% by weight, based on solids, of a crystalline polymer additive (CA) which
(a) is partially miscible with the PSAC,
(b) has a heat of fusion of at least 20 Joules/g,
(c) is intimately admixed with the PSAC, and
(d) has a molecular weight (M_{w}) less than 25,000 Daltons;
p being 50 to 99.5, and q being 0.5 to 50 when the crystalline polymer additive is an acrylic polymer, and p being 50 to 99 and q being 1 to 50 when the crystalline polymer additive is not an acrylic polymer; whereby, when the PSA composite is bonded to a substrate at a temperature within the NUTZ, the strength of the bond between the PSA composite and the substrate can be reduced by (i) heating the composition above the maximum temperature of the NUTZ or (ii) cooling the composition below the minimum temperature of the NUTZ.

2. A PSA composite according to claim 1 wherein the PSAC is a pressure sensitive adhesive at room temperature.

3. A PSA composite according to claim 2 wherein the PSAC is selected from natural rubber adhesives; styrene-butadiene latex adhesives; thermoplastic rubbers of the A-B-A block copolymer type, where A represents a thermoplastic polystyrene end block and B represents a polyisoprene midblock; butyl rubbers; polyisobutylenes; acrylic adhesives, and polymers and copolymers of vinyl ethers.

4. A PSA composite according to any of the preceding claims wherein the CA is a side chain crystallizable polymer.

5. A PSA composite according to claim 1 wherein the PSAC is an acrylic adhesive which is a pressure-sensitive adhesive at room temperature; the CA comprises repeating units derived from at least one monomer selected from acrylates, methacrylates, acrylamides and methacrylamides containing linear aliphatic groups containing 14 to 50 carbon atoms, preferably 16 to 22 carbon atoms; p is 50 to 99; and q is 1 to 50.

6. A PSA composite according to any one of the preceding claims wherein the solubility parameter of the PSAC (δ₁) and the solubility parameter of the CA (δ₂) are such that
δ₁ - 0.5 ≤ δ₂ ≤ δ₁ + 1.5

7. A PSA composite according to any one of the preceding claims wherein p is 65 to 95, and q is 5 to 35.

8. A PSA composite according to any one of the preceding claims wherein the backing is flexible.

9. A PSA composite according to any one of the preceding claims which is a bandage, tape, wound closure, or wound dressing for use in the medical or surgical field and has a moisture vapor transmission rate (MVTR) of more than 100 g/m²/day.

10. A process for removing a PSA composite from a substrate to which it is adhered, the PSA composite being a PSA composite as claimed in any one of claims 1 to 9, said process comprising
(A) heating the PSA composite to a temperature above the maximum temperature of the NUTZ, or cooling the PSA composite to a temperature below the minimum temperature of the NUTZ, thereby reducing the bond strength between the PSA composite and the substrate; and
(B) removing the PSA composite from the substrate.

## Patentansprüche

1. PSA-Komposit, der (i) an einem Substrat bei einer Temperatur innerhalb einer Normalgebrauchstemperatuzrzone (NUTZ) mit einer Minimaltemperatur und einer Maximaltemperatur befestigt werden kann, und (ii) umfaßt:
(A) einen Rücken und
(B) beschichtet auf dem Rücken eine lösungsmittelfreie Schicht aus einer Haftklebstoffzusammensetzung, die (i) über einen Temperaturbereich der von der NUTZ umfaßt wird, mindestens etwas Klebrigkeit beibehält und sowohl adhäsive als auch kohäsive Festigkeit behält, wenn sie an das Substrat gebunden ist, und (ii):
(1) p Gew.-%, bezogen auf Feststoffe, einer polymeren druckempfindlichen Komponente (PSAC) und
(2) q Gew.-%. bezogen auf Feststoffe, eines kristallinen Polymeradditivs (CA) umfaßt, das
(a) teilweise mit der PSAC mischbar ist,
(b) eine Schmelzwärme von mindestens 20 Joule/g hat,
(c) innig mit der PSAC gemischt ist und
(d) ein Molekulargewicht (M_{w}) kleiner als 25 000 Dalton aufweist,
wobei p 50 bis 99,5 beträgt und q 0,5 bis 50 beträgt, wenn das kristalline Polymeradditiv ein acrylisches Polymer ist, und p 50 bis 99 beträgt und q 1 bis 50 beträgt, wenn das kristalline Polymeradditiv kein acrylisches Polymer ist, wodurch, wenn der PSA-Komposit bei einer Temperatur innerhalb der NUTZ an das Substrat gebunden wird, die Festigkeit der Bindung zwischen dem PSA-Komposit und dem Substrat verringert werden kann, indem (i) die Zusammensetzung über die Maximaltemperatur der NUTZ erhitzt wird, oder (ii) die Zusammensetzung unter die Minimaltemperatur der NUTZ abgekühlt wird.

2. PSA-Komposit nach Anspruch 1, bei dem die PSAC bei Raumtemperatur ein Haftklebstoff ist.

3. PSA-Komposit nach Anspruch 2, bei dem die PSAC ausgewählt ist aus Naturkautschukklebstoffen, Styrol/Butadien-Latexklebstoffen, thermoplastischen Kautschuken des A-B-A-Blockcopolymer-Typs, wobei A einen thermoplastischen Polystyrolendblock darstellt und B einen Polyisoprenmittelblock darstellt, Butylkautschuken, Polyisobutylenen, acrylischen Klebstoffen und Polymeren und Copolymeren von Vinylethern.

4. PSA-Komposit nach einem der vorhergehenden Ansprüche, bei dem das CA ein seitenkettenkristallisierbares Polymer ist.

5. PSA-Komposit nach Anspruch 1, bei dem die PSAC ein acrylischer Klebstoff ist, der bei Raumtemperatur ein Haftklebstoff ist, das CA sich wiederholende Einheiten umfaßt, die sich von mindestens einem Monomer ausgewählt aus Acrylaten, Methacrylaten, Acrylamiden und Methacrylamiden mit linearen aliphatischen Gruppen ableiten, die 14 bis 50 Kohlenstoffatome, vorzugsweise 16 bis 22 Kohlenstoffatome aufweisen, wobei p 50 bis 99 ist und q 1 bis 50 ist.

6. PSA-Komposit nach einem der vorhergehenden Ansprüche, bei dem der Löslichkeitsparameter der PSAC (δ₁) und der Löslichkeitsparameter des CA (δ₂) so sind, daß
δ₁ - 0,5 ≤ δ₂ ≤ δ₁ + 1,5
ist.

7. PSA-Komposit nach einem der vorhergehenden Ansprüche, bei dem p 65 bis 95 ist und q 5 bis 35 ist.

8. PSA-Komposit nach einem der vorhergehenden Ansprüche, bei dem der Rücken flexibel ist.

9. PSA-Komposit nach einem der vorhergehenden Ansprüche, der eine Bandage, Band, Wundverschluß oder Wundverkleidung für die Verwendung im medizinischen oder chirurgischen Gebiet ist und eine Feuchtigkeitsdampfdurchlaßrate (MVTR) von mehr als 100 g/m²/Tag aufweist.

10. Verfahren zur Entfernung eines PSA-Komposit von einem Substrat, an dem er haftet, wobei der PSA-Komposit ein PSA-Komposit gemäß einem der Ansprüche 1 bis 9 ist und das Verfahren umfaßt:
(A) das Erhitzen des PSA-Komposits auf eine Temperatur oberhalb der Maximumtemperatur der NUTZ oder Abkühlung des PSA-Komposits auf eine Temperatur unterhalb der Minimumtemperatur der NUTZ, wodurch die Bindungsfestigkeit zwischen dem PSA-Komposit und dem Substrat verringert wird, und
(B) die Entfernung des PSA-Komposit von dem Substrat.

## Revendications

1. Un composite PSA qui (i) peut être fixé à un substrat à une température se situant dans une zone de température d'usage normal (NUTZ) ayant une température minimale et une température maximale; et (ii) comprend
(A) un support, et
(B) appliquée sur le support, une couche sans solvant d'une composition d'adhésif sensible à la pression qui (i) sur tout un intervalle de température encadré par la NUTZ, conserve au moins un certain collant instantané et retient à la fois une force d'adhésion et une force de cohésion lorsqu'elle est liée à un substrat ; et (ii) comprend :
(1) p % en poids, sur la base de la matière sèche, d'un composant polymère sensible à la pression (PSAC) ; et
(2) q % en poids, sur la base de la matière sèche, d'un additif polymère cristallin (CA) qui
(a) est partiellement miscible au PSAC,
(b) a une chaleur de fusion d'au moins 20 joules/g,
(c) est intimement mélangé au PSAC, et
(d) a un poids moléculaire (PM) inférieur à 25 000 daltons ;
p étant de 50 à 99,5 et q étant de 0,5 à 50 lorsque l'additif polymère cristalin est un polymère acrylique, et p étant de 50 à 99 et q étant de 1 à 50 lorsque l'additif polymère cristallin n'est pas un polymère acrylique ; de sorte que, lorsque le composite PSA est lié à un substrat à une température comprise dans la NUTZ, la force de la liaison entre le composite PSA et le substrat puisse être réduite (i) par chauffage de la composition au-dessus de la température maximale de la NUTZ ou (ii) par refroidissement de la composition au-dessous de la température minimale de la NUTZ.

2. Un composite PSA selon la revendication 1, dans lequel le PSAC est un adhésif sensible à la pression à la température ambiante.

3. Un composite PSA selon la revendication 2, dans lequel le PSAC est choisi parmi les adhésifs de type caoutchouc naturel ; les adhésifs de type latex styrène-butadiène ; les caoutchoucs thermoplastiques du type copolymère séquence A-B-A où A représente une séquence terminale de polystyrène thermoplastique et B représente une séquence médiane de polyisoprène ; les caoutchoucs butyliques ; les polyisobutylènes ; les adhésifs acryliques, et les polymères et copolymères d'éthers de vinyle.

4. Un composite PSA selon l'une quelconque des revendications précédentes, dans lequel le CA est un polymère cristallisable à chaînes latérales.

5. Un composite PSA selon la revendication 1, dans lequel le PSAC est un adhésif acrylique qui est un adhésif sensible a la pression à la température ambiante ; le CA comprend des motifs récurrents dérivés d'au moins un monomère choisi parmi les acrylates, méthacrylates, acrylamides et méthacrylamides contenant des groupes aliphatiques linéaires contenant 14 à 50 atomes de carbone, de préférence 16 à 22 atomes de carbone ; p est de 50 à 99 et q est de 1 à 50.

6. Un composite PSA selon l'une quelconque des revendications précédentes, dans lequel le paramètre de solubilité du PSAC (δ₁) et le paramètre de solubilité du CA (δ₂) sont tels que
δ₁ - 0,5 ≤ δ₂ ≤ δ₁+ 1,5.

7. Un composite PSA selon l'une quelconque des revendications précédentes, dans lequel p est de 65 à 95 et q est de 5 à 35.

8. Un composite PSA selon l'une quelconque des revendications précédentes, dans lequel le support est souple.

9. Un composite PSA selon l'une quelconque des revendications précédentes, qui est un bandage, un ruban, un élément de fermeture de plaie ou un pansement à utiliser dans le domaine médical ou chirurgical et qui présente une vitesse de transmission de vapeur d'eau (MVTR) supérieure à 100 g/m²/jour.

10. Un procédé pour enlever un composite PSA d'un substrat auquel il adhère, le composite PSA étant un composite PSA tel que revendiqué dans l'une quelconque des revendications 1 à 9, ledit procédé consistant à
(A) chauffer le composite PSA à une température supérieure à la température maximale de la NUTZ, ou refroidir le composite PSA à
une température inférieure à la température minimale de la NUTZ, pour réduire ainsi la force de liaison entre le composite PSA et le substrat ;
et
(B) enlever le composite PSA du substrat.
